# EUROPEAN PATENT APPLICATION

(11) **EP 2 523 125 A2**
(43) Date of publication of application: **14.11.2012**
(21) Application number: 12159317.2
(22) Date of filing: 13.03.2012
(51) Int. Cl.: G06F 17/30

(54) **Method and device for acquiring keywords**

(30) Priority: 13.05.2011 CN 201110128161
(71) Applicant: Fujitsu Limited, Kawasaki-shi, Kanagawa 211-8588 (JP)
(72) Inventor: Pan, Yifeng, 100025 Beijing (CN); Sun, Jun, 100025 Beijing (CN); Zhu, Yuanping, 100025 Beijing (CN); Pan, Pan, 100025 Beijing (CN); He, Yuan, 100025 Beijing (CN); Naoi, Satoshi, 100025 Beijing (CN)
(74) Representative: Holz, Ulrike

(57) **Abstract**

Locating text areas in an image and recognizing text contents in the text areas through optical character recognition, OCR; selecting a first class of pending keywords from the recognized text contents to search for webpages; extracting a second class of pending keywords from the retrieved webpages; and determining one or more keywords corresponding to the image from at least the second class of pending keywords. With the embodiment of the invention, both OCR and webpage searching can be combined so that the webpages can be retrieved based upon the first class of pending keywords recognized and selected through OCR to ensure convergence of the keywords and then the second class of pending keywords can be selected from the retrieved webpages to ensure correctness of the keywords.

## Description

### Field of the Invention

The present invention generally relates to image processing and in particular to a method and device for acquiring keywords.

### Background of the Invention

People publish and acquire information in daily life in an increasing number of ways along with the constant development of sciences and technologies. To publish an advertisement, for example, a detailed introduction of the outdoor advertisement corresponding to an publicized image of the advertisement can be published in a document or the like on the Internet in addition to the publicized image posted in the prior art, and when a user sees the image of the advertisement containing a rather limited amount of information, the user interested in the advertisement can record texts in the image and then log onto the Internet through a computer or a mobile phone, enter the recorded texts in the image into a search engine and search for details of the advertisement.

However, the user has to enter the texts in the image as search keywords when performing searching, but the input process is manually performed and thus prone to an error, cumbersome and inefficient on one hand, and there is so limited information of the texts contained in the image that the keywords determined from the image is not accurate enough on the other hand. Therefore automatic and efficient acquisition of accurate keywords corresponding to the image is rather important for subsequent operations, and these keywords can be applied to searching for data (images or webpages), inquiring about product information and a variety of services including a demand distribution statistics service and other services.

A method for acquiring automatically keywords corresponding to an image in the prior art can be performed through character recognition and text extraction, e.g., Optical Character Recognition (OCR), etc., and although the keywords corresponding to the image are extracted automatically in this method, the extracted keywords may suffer from the problem of an recognition error or of inaccuracy due to the limited recognition accuracy of characters and amount of text information in the image.

### Summary of the Invention

In view of this, embodiments of the invention provide a method and device for acquiring keywords, which can acquire more accurate keywords corresponding to an image based upon the image.

According to an aspect of the embodiments of the invention, there is provided a method for acquiring keywords, which includes:

locating text areas in an image and recognizing text contents in the text areas through optical character recognition, OCR;

selecting a first class of pending keywords from the recognized text contents to search for webpages;

extracting a second class of pending keywords from the retrieved webpages; and

determining one or more keywords corresponding to the image from at least the second class of pending keywords.

According to another aspect of the embodiments of the invention, there is provided a device for acquiring keywords, which includes:

a recognizing unit adapted to locate text areas in an image and to recognize text contents in the text areas through optical character recognition, OCR;

a searching unit adapted to select a first class of pending keywords from the recognized text contents to search for webpages;

an extracting unit adapted to extract a second class of pending keywords from the retrieved webpages; and

a determining unit adapted to determine one or more keywords corresponding to the image from at least the second class of pending keywords.

Furthermore, according to another aspect of the invention, there is further provided a storage medium including machine readable program codes which when being executed on an information processing apparatus cause the information processing apparatus to perform the foregoing method for acquiring keywords according to the invention.

Furthermore, according to a further aspect of the invention, there is further provided a program product including machine executable instructions which when being executed on an information processing apparatus cause the information processing apparatus to perform the foregoing method acquiring keywords according to the invention.

According to the foregoing solutions of the embodiments of the invention, the keywords extracted through OCR may be highly convergent but have a poor recognition ratio and low recognition accuracy, and the keywords extracted from the retrieved webpages may be relatively accurate but include redundant contents and a large number of irrelevant words (that is, of poor convergence), but both OCR and webpage searching can be combined so that the webpages can be retrieved based upon the first class of pending keywords recognized and selected through OCR to ensure convergence of the keywords and then the second class of pending keywords can be selected from the retrieved webpages to ensure correctness of the keywords, thereby improving accuracy of the eventually determined keywords corresponding to the image. These keywords can be applied to searching for data (images or webpages), inquiring about product information and a variety of services including a demand distribution statistics service and other services.

Other aspects of the embodiments of the invention will be presented in the following detailed description serving to fully disclose preferred embodiments of the invention but not to limit the invention.

### Brief Description of the Drawings

The foregoing and other objects and advantages of the embodiments of the invention will be further described below in conjunction with the particular embodiments with reference to the drawings in which identical or corresponding technical features or components will be denoted with identical or corresponding reference numerals.

Fig.1 is a flow chart illustrating a method according to an embodiment of the invention;

Fig.2A is a schematic diagram illustrating an image in the embodiment of the invention;

Fig.2B is a schematic diagram illustrating another image in the embodiment of the invention;

Fig.3 is a flow chart illustrating selecting a first class of pending keywords to search for webpages in the method according to the embodiment of the invention;

Fig.4 is a flow chart illustrating extracting a second class of pending keywords from the retrieved webpages in the method according to the embodiment of the invention;

Fig.5A is a schematic diagram illustrating results of searching for webpages according to the embodiment of the invention;

Fig.5B is a schematic diagram illustrating results of searching for webpages according to the embodiment of the invention;

Fig.6A is a schematic diagram illustrating representative webpages according to the embodiment of the invention;

Fig.6B is a schematic diagram illustrating representative webpages according to the embodiment of the invention;

Fig.7 is a schematic diagram illustrating a device according to an embodiment of the invention;

Fig.8 is a schematic diagram illustrating a searching unit in the device according to the embodiment of the invention;

Fig.9 is a schematic diagram illustrating a extracting unit in the device according to the embodiment of the invention; and

Fig.10 is a block diagram illustrating an illustrative structure of a personal computer as an information processing apparatus used in the embodiments of the invention.

### Detailed Description of the Invention

Embodiments of the invention will be described below with reference to the drawings.

The inventors have identified during making of the invention that acquisition of keywords corresponding to an image in the method of the prior art may suffer from at least the following problems.

To extract keywords corresponding to an image in the prior art, the adopted method is to recognize characters and extract texts directly from text information in the image and to further acquire the keywords corresponding to the image. In this method, an incorrectly recognized keyword may easily occur due to a rather limited amount of text information contained in the image and the recognition accuracy of the image, and consequently the acquired keywords descriptive of the information corresponding to the image may not be accurate enough.

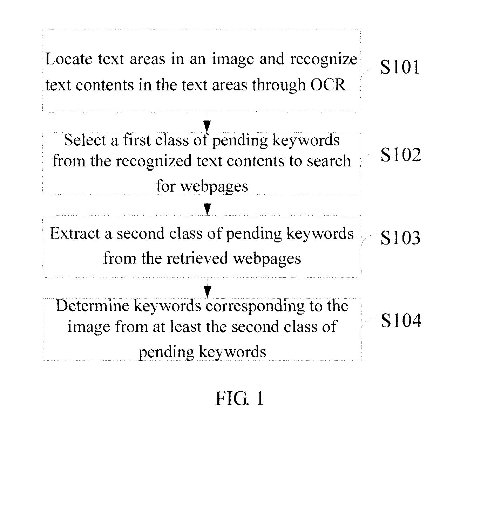

Therefore an embodiment of the invention firstly provides a corresponding method addressing this problem. Referring particularly to Fig.1, the method for acquiring keywords according to the embodiment of the invention includes:

S101: Text areas in an image are located, and text contents in the text areas are recognized through OCR.

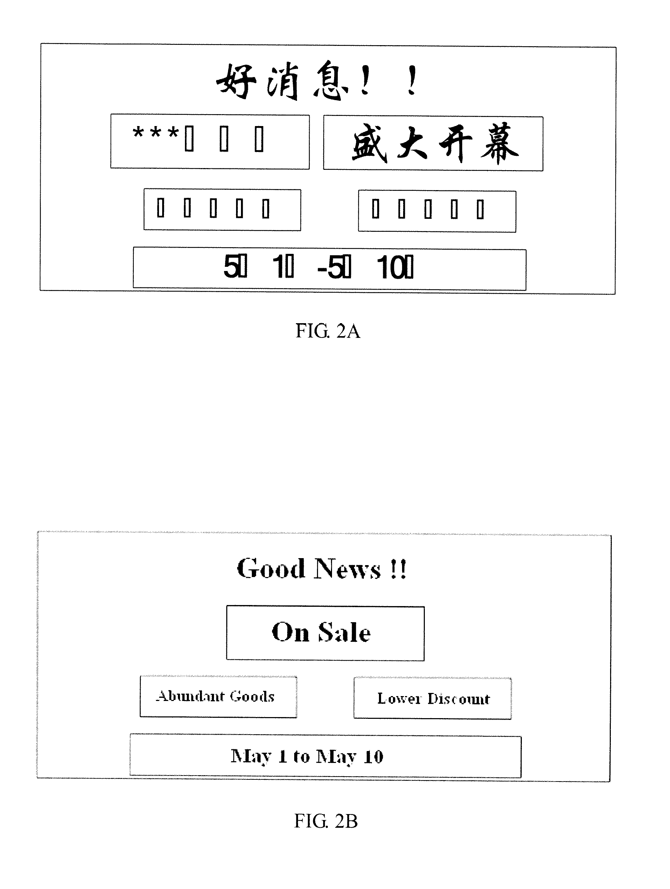

After a user acquires an image through capturing with a mobile phone or otherwise, firstly text areas in the image can be located in an existing text detection method, e.g., an area-based method, a connectivity component-based method, etc., as illustrated in Figs.2A and 2B. Then text strokes can be extracted in an existing stroke extraction method, e.g., a color clustering method, a gray scale binarization method, etc.

After the text areas are located and the text strokes are extracted, text contents in the text areas are recognized through text recognition and are combined in a unit of word. The foregoing process can be performed through OCR which is such a process that an electronic apparatus (e.g., a scanner, a digital camera, etc.) checks characters printed on a sheet of paper or another medium, for example, by determining a pattern of darkness and brightness to determine their shapes, and then translates the shapes into computer texts through character recognition, that is, a process in which a text document is scanned and an image file is analyzed to acquire texts and page information.

The processes of locating the text areas and recognizing the text contents can be performed as in the prior art, and detailed descriptions thereof will not be repeated here. In this step, the recognized text contents are as depicted in Tables 1 and 2 below:

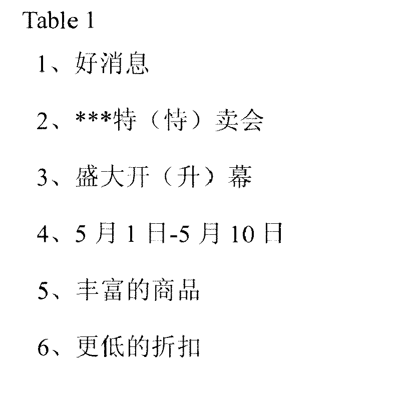

**Table 2**

| | |
|---|---|
| 1. | Good News |
| 2. | On Sale (Sole) |
| 3. | Abundant Goods (Gods) |
| 4. | May 1 to May 10 |
| 5. | Lower Discount |

Particularly recognized words may include a plurality of candidate words due to the limited recognition accuracy. For example, words recognized from "*** 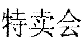 " include a candidate word "*** 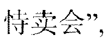 " and words recognized from "On Sale" include a candidate word "On Sole". The recognized words can further be sorted under a specific rule, for example, by their confidences, locations in the image, sizes, etc., or a combination thereof.

S102: A first class of pending keywords is selected from the recognized text contents to search for webpages.

After the text contents are recognized, the recognized text contents can be used directly as a first class of pending keywords to search for webpages, or a part of the recognized text contents can be selected as a first class of pending keywords to subsequently search for webpages. A specific process of selecting a part of the recognized text contents will be described later in an embodiment.

Particularly a search engine can be invoked to search for webpages with the determined first class of pending keywords being as webpage search keywords. This process of searching for webpages can be performed as in the prior art, and a detailed description thereof will not repeated here.

S103: A second class of pending keywords is extracted from the retrieved webpages.

After the webpages are retrieved, a second class of pending keywords can be extracted directly from the retrieved webpages under a specific rule, for example, of the number of recurrences among the retrieved webpages satisfying a condition or the location of occurrence among the retrieved webpages satisfying a condition. Alternatively a combination of the foregoing rules can be used as a criterion for selecting the second class of pending keywords.

Before the second class of pending keywords is selected, firstly the retrieved webpages can be filtered, and then the second class of pending keywords can be extracted from the filtered webpages under the foregoing rule. Particularly the webpages can be filtered under a specific preset rule, for example, of the extents to which words contained in the webpages match the first class of pending keywords, the frequencies that the first class of pending keywords occurs in the webpages or another rule independent of the first class of pending keywords. A specific process thereof will be described later in an embodiment.

S104: Keywords corresponding to the image are determined from at least the second class of pending keywords.

After the second class of pending keywords is extracted from the retrieved webpages, keywords corresponding to the image can further be determined from the second class of pending keywords and particularly can be selected directly from the second class of pending keywords under a specific rule, for example, of a confidence being above a specific threshold or the frequency of occurrence in the title of a webpage document being above a specific threshold or the frequency of occurrence at the crucial location of a text being above a specific threshold. Alternatively some important parts of speech, e.g., a time, a place, an object, etc., can be determined empirically, or a combination of the forgoing rules can also be used as a criterion for selecting the keywords corresponding to the image.

Alternatively the keywords corresponding to the image can be selected from the first class of pending keywords and/or the second class of pending keywords according to the result of verifying the second class of pending keywords against the first class of pending keywords. Details thereof will be described later in an embodiment.

In the embodiment of the invention, the keywords extracted through OCR may be highly convergent but have a poor recognition ratio and low recognition accuracy, and the keywords extracted from the retrieved webpages may be relatively accurate but include redundant contents and a large number of irrelevant words (that is, of poor convergence), but both OCR and webpage searching can be combined so that the webpages can be retrieved based upon the first class of pending keywords recognized and selected through OCR to ensure convergence of the keywords and then the second class of pending keywords can be selected from the retrieved webpages to ensure correctness of the keywords, thereby ensuring accuracy of the eventually determined keywords corresponding to the image. These keywords can be applied to searching for data (images or webpages), inquiring about product information and a variety of services including a demand distribution statistics service and other services.

A description will be presented in an illustrative embodiment of the invention while still taking acquisition of the image illustrated in Figs.2A and 2B as an example, and in this illustrative embodiment, text areas in the image are located and text contents in the text areas are recognized through OCR, thereby obtaining the recognized text contents depicted in Tables 1 and 2 including candidate phrases arranged in a descending order of confidences of the recognized text contents.

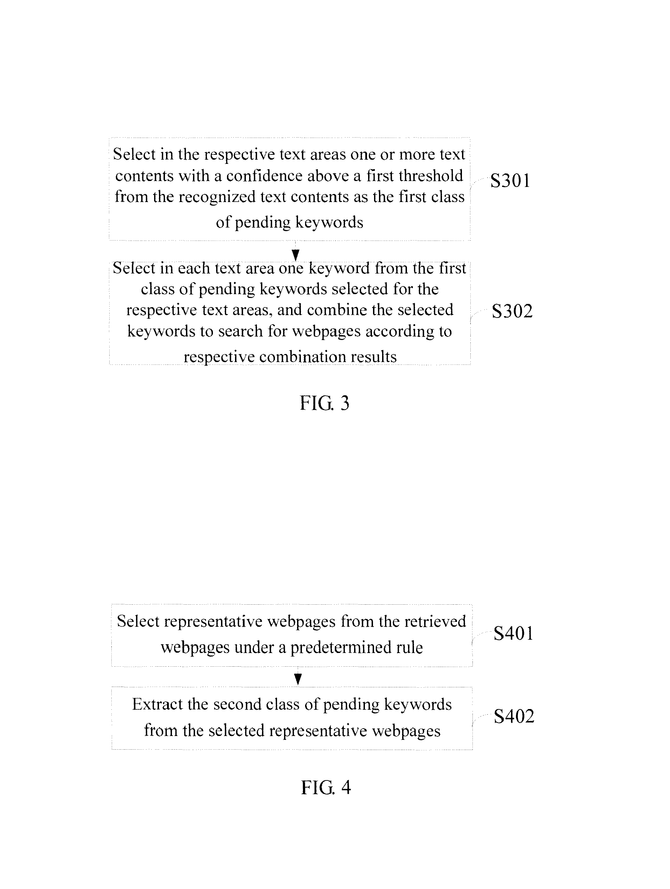

The step of further selecting a first class of pending keywords from the recognized text contents to search for webpages can further include the two sub-steps as illustrated in Fig.3:

S301: One or more text contents with a confidence above a first threshold are selected from the recognized text contents in the respective text areas as the first class of pending keywords.

In this embodiment, text contents with a confidence above the first threshold are selected directly in Tables 1 and 2 as the first class of pending keywords, for example, the text contents numbered 1 to 3 in Tables 1 and 2 are selected as the first class of pending keywords which still include candidate phrases.

Of course in another embodiment, the first class of pending keywords can be selected alternatively by firstly determining as alternative words the text contents located in an important zone (e.g., at the center, etc.) of the image and with a text size above a specific threshold (or with a size the ratio of which to the smallest text size is above a specific threshold) and then selecting the words with a confidence above the first threshold from the alternative words as the first class of pending keywords. This rule can be set otherwise, and a repeated description thereof will be omitted here.

S302: One keyword is selected in each text area from the first class of pending keywords selected for the respective text areas, and the selected keywords are combined to search for webpages according to respective combination results.

The first class of pending keywords selected in the foregoing step includes the text contents numbered 1 to 3 in Tables 1 and 2, which are recognized respectively from different text areas, i.e., " 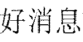 ", and " 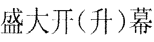 ", and "Good News", "On Sale (Sole)" and "Abundant Goods (Gods)", where "*** 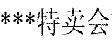 " and "*** 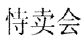 " are two sets of candidate words from the same text area, " 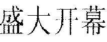 " and " 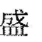 " are two sets of candidate words from the same text area, "On Sale" and "On Sole" are two sets of candidate words from the same text area, and "Abundant Goods" and "Abundant Gods" are two sets of candidate words from the same text area. Since it is impossible for OCR recognition to determine which one of a plurality of sets of candidate words if any is correct, one keyword can be selected in each text area based upon the text contents recognized in the respective text area, and then the selected keywords can be combined to search with respective combination results being as webpage searching keywords.

For example, for Fig. 2A, " 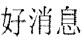 ", "*** 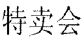 " and " 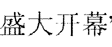 " can be used as a set of keywords to search for webpages, and " 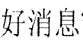 ", "*** 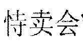 " and " 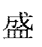 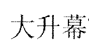 " can be used as another set of keywords to search for webpages, while for Fig.2B, "Good News", "On Sale" and "Abundant Goods" can be used as a set of keywords to search for webpages, and "Good News", "On Sole" and "Abundant Gods" can be used as another set of keywords to search for webpages. Of course other combinations of keywords are also possible but will not be enumerated here.

In an illustrative embodiment of the invention, the step of extracting the second class of pending keywords from the retrieved webpages after searching for the webpages can further include the two sub-steps as illustrated in Fig.4:

S401: Representative webpages are selected from the retrieved webpages under a predetermined rule.

After searching for the webpages with the foregoing combined keywords, a plurality of results can be retrieved with the respective sets of keywords, and in this step the retrieved webpages can be filtered to select representative webpages in order to further refine the subsequently determined second class of pending keywords.

The representative webpages can be selected under numerous rules. For example, firstly several top-ranked webpages (e.g., the first three webpages etc.) can be selected from webpages corresponding to each set of keywords, and then similarities of the respective sets of webpages to the corresponding keywords in combination can be compared, and the set of webpages with the highest similarity can be selected as representative webpages; or the first three webpages corresponding to each set of keywords can be selected, and then similarities between the webpages in the respective set of webpages can be compared, and the set of webpages with the highest similarity can be selected as representative webpages. Of course the representative webpages can be selected as in the prior art, e.g., a string-matching method recited by Gerard Salton, A. Wong, C. S. Yang in A Vector Space Model for Automatic Indexing. Commun. ACM 18(11): 613-620 (1975), and Scott C. Deerwester, Susan T. Dumais, Thomas K. Landauer, George W. Furnas, Richard A. Harshman in Indexing by Latent Semantic Analysis. JASIS 41(6): 391-407 (1990), etc.

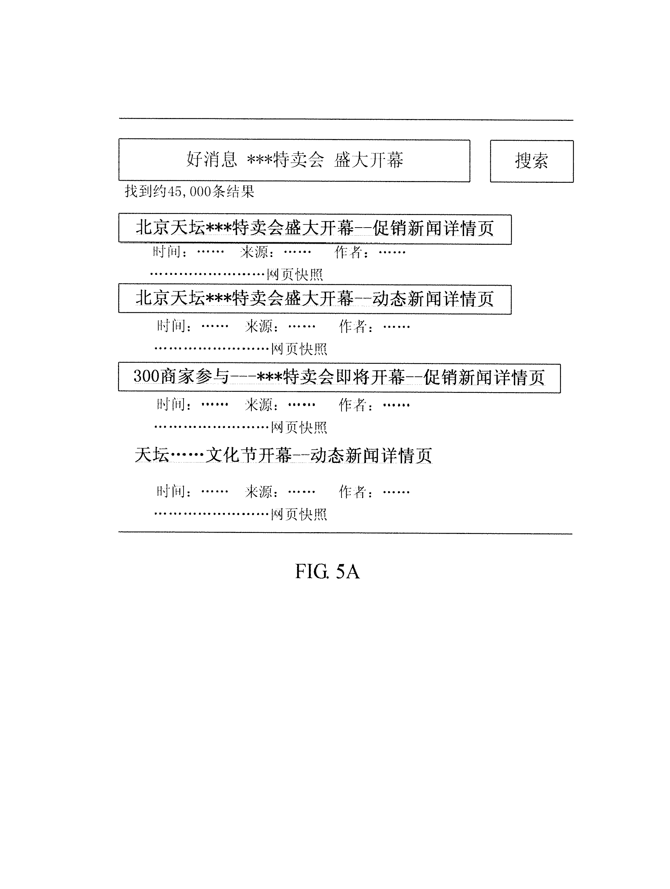

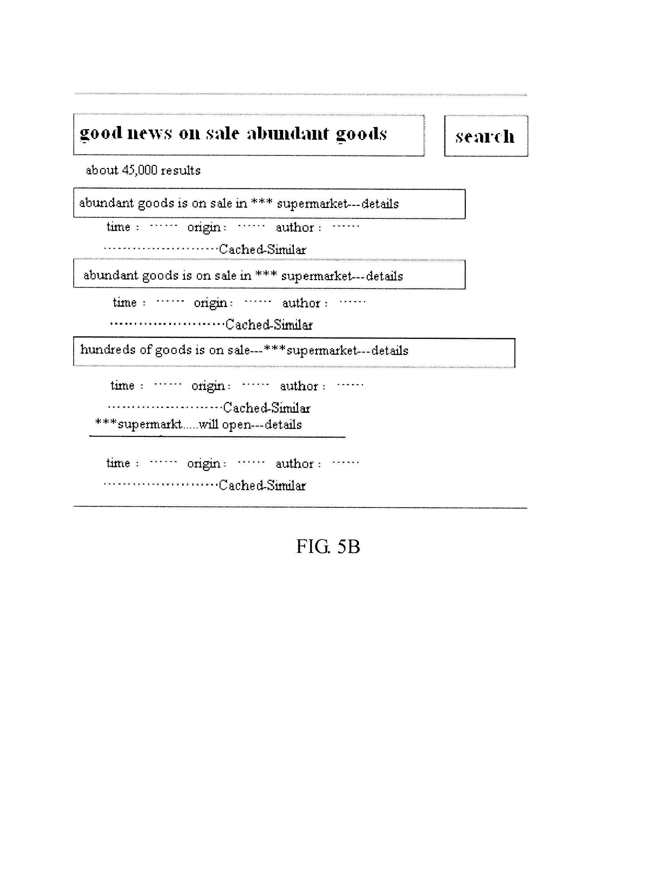

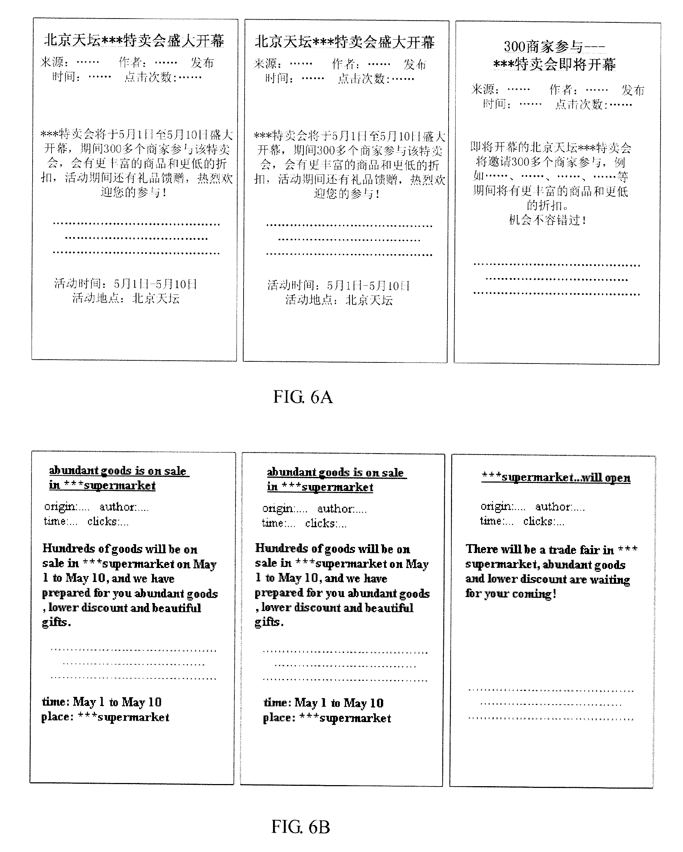

In this embodiment, as can be apparent from the webpages retrieved with the combination of keywords " 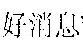 ", "*** 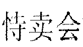 " and " 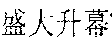 ", the similarity of these webpages to the keywords " 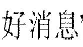 ", "*** 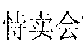 " and " 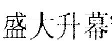 " is apparently lower than the similarity of the webpages retrieved with the combination of keywords " 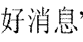 ", "*** 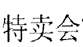 " and " 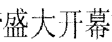 " to the keywords due to a high accuracy of text contents in the webpages. Therefore the eventually selected representative webpages will naturally be three top-ranked webpages retrieved with the combination of keywords " 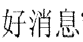 ", "*** 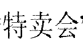 " and " 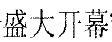 " as illustrated in Fig.5A and Fig.6A. Moreover, as can be apparent from the webpages retrieved with the combination of keywords "Good News", "On Sole" and "Abundant Gods", the similarity of these webpages to the keywords "Good News", "On Sole" and "Abundant Gods" is apparently lower than the similarity of the webpages retrieved with the combination of keywords "Good News", "On Sale" and "Abundant Goods" to the keywords due to a high accuracy of text contents in the webpages. Therefore the eventually selected representative webpages will naturally be three top-ranked webpages retrieved with the combination of keywords "Good News", "On Sale" and "Abundant Goods" as illustrated in Fig.5B and Fig.6B

S402: The second class of pending keywords is extracted from the selected representative webpages.

The process of selecting the second class of pending keywords can be similar to the step S103 in the foregoing embodiment, and a repeated description thereof will be omitted here. In the first case, the determined second class of pending keywords includes "*** 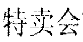 ", " 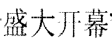 ", " 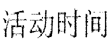 :5 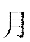 1 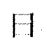 -5 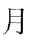 10 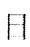 ", " 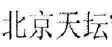 "," 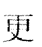 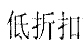 ", " 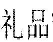 ", etc., and in the second case, the determined second class of pending keywords includes "On Sale", "May 1 to May 10", "***Supermarket", "Lower Discount", "Gifts", etc.

After the second class of pending keywords is extracted, the keywords corresponding to the image can be selected from the first class of pending keywords and/or the second class of pending keywords according to the result of verifying the second class of pending keywords against the first class of pending keywords.

In this embodiment, the second class of pending keywords extracted from the representative webpages can be verified against the first class of pending keywords extracted from the recognition results of OCR. Under a specific verification rule, the confidences of the second class of pending keywords in the recognition results of OCR can be verified, or information on the sizes and locations of the second class of pending keywords in the image can be verified, etc. Specifically if the first class of pending keywords includes selected keywords with a high confidence or with compliantly sized or located text contents, then those words also occurring in the first set of pending keywords can be selected in the second class of pending keywords as the keywords corresponding to the image.

Of course in another embodiment, the keywords corresponding to the image can alternatively be selected directly in the second class of pending keywords under a specific rule, for example, of a confidence being above a second threshold or the frequency of occurrence in the title of a webpage document being above a specific threshold or the frequency of occurrence at the crucial location of a text being above a specific threshold. Alternatively some important parts of speech, e.g., a time, a place, an object, etc., can be determined empirically, or a combination of the rules can be used as a criterion for selecting the keywords corresponding to the image.

Of course the foregoing two approaches can be combined so that the keywords corresponding to the image can be determined as the sum of the result of verification against the first class of pending keywords and the words selected in the second approach. For example, in the first case, the keywords corresponding to the image includes "*** 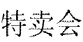 ", " 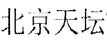 ", and " 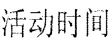 : 5 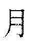 1 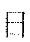 -5 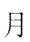 10 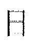 " and in the second case, the keywords corresponding to the image includes "On Sale", "***Supermarket" and "May 1 to May 10".

Accuracy of the eventually determined keywords corresponding to the image can be ensured by combining OCR with webpage searching. The first class of pending keywords and the representative webpages can be filtered to thereby reduce the workload of data processing and improve the efficiency of selecting the keyword, and irrelevant contents can be removed to thereby make the eventually acquired keywords more accurate.

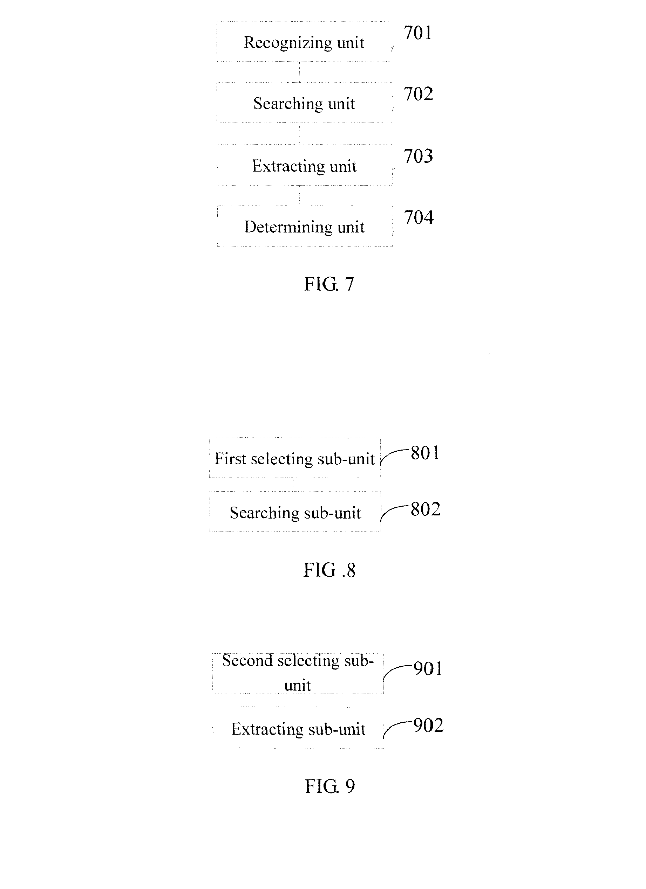

In correspondence to the first method for acquiring keywords according to the embodiment of the invention, an embodiment of the invention further provides a device for acquiring keywords, and referring to Fig.7, the device may include:

A recognizing unit 701 adapted to locate text areas in an image and to recognize text contents in the text areas through optical character recognition, OCR.

A searching unit 702 adapted to select a first class of pending keywords from the recognized text contents to search for webpages.

An extracting unit 703 adapted to extract a second class of pending keywords from the retrieved webpages.

A determining unit 704 adapted to determine keywords corresponding to the image from at least the second class of pending keywords.

After a user acquires an image through capturing with a mobile phone or otherwise, the recognizing unit 701 locates text areas in the image in an existing text detection method and extracts text strokes in an existing stroke extraction method, and then recognizes text contents in the text areas through text recognition and combines them in a unit of word. The searching unit 702 can use the recognized text contents directly as the first class of pending keywords to search for webpages, or select a part of the recognized text contents as the first class of pending keywords to subsequently search for webpages. The extracting unit 703 can extract the second class of pending keywords directly from the retrieved webpages under a specific rule, or firstly filter the retrieved webpages and then extract the second class of pending keywords from the selected webpages under the foregoing rule. The determining unit 704 can further determine the keywords corresponding to the image from the second class of pending keywords, particularly by selecting directly from the second class of pending keywords under a specific rule or selecting the keywords corresponding to the image from the first class of pending keywords and/or the second class of pending keywords according to the result of verifying the second class of pending keywords against the first class of pending keywords.

In the foregoing units according to the embodiment of the invention, both OCR and webpage searching can be combined so that the webpages can be retrieved based upon the first class of pending keywords recognized and selected through OCR to ensure convergence of the keywords and then the second class of pending keywords can be selected from the retrieved webpages to ensure correctness of the keywords, thereby ensuring accuracy of the eventually determined keywords corresponding to the image. These keywords can be applied to searching for data (images or webpages), inquiring about product information and a variety of services including a demand distribution statistics service and other services.

According to an illustrative embodiment of the invention, the searching unit can further include two sub-units as illustrated in Fig.8:

A first selecting sub-unit 801 adapted to select in the respective text areas one or more text contents with a confidence above a first threshold from the recognized text contents as the first class of pending keywords.

A searching sub-unit 802 adapted to select in each text area one keyword from the first class of pending keywords selected for the respective text areas and to combine the selected keywords to search for the webpages according to respective combination results.

According to an illustrative embodiment of the invention, the extracting unit can further include two sub-units as illustrated in Fig.9:

A second selecting sub-unit 901 adapted to select representative webpages selected from the retrieved webpages under a predetermined rule.

An extracting sub-unit 902 adapted to extract the second class of pending keywords from the selected representative webpages.

According to an illustrative embodiment of the invention, the determining unit can be particularly configured to select the keywords corresponding to the image from the first class of pending keywords and/or the second class of pending keywords according to the result of verifying the second class of pending keywords against the first class of pending keywords. According to another embodiment of the invention, the determining unit can further be particularly configured to select the keywords with a confidence above a second threshold from the second class of pending keywords as the keywords corresponding to the image.

In the foregoing units, accuracy of the eventually determined keywords corresponding to the image can be ensured by combining OCR with webpage searching. Also in the foregoing units, the first class of pending keywords and the representative webpages can be filtered to thereby reduce the workload of data processing and improve the efficiency of selecting the keyword, and irrelevant contents can be removed to thereby make the eventually acquired keywords more accurate.

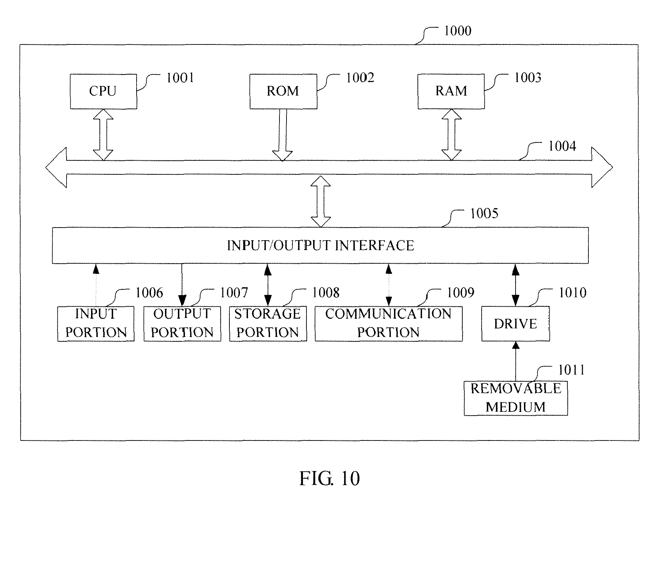

Furthermore it shall be noted that the foregoing series of processes and apparatuses can also be embodied in software and/or firmware. In the case of being embodied in software and/or firmware, a program constituting the software is installed from a storage medium or a network to a computer with a dedicated hardware structure, e.g., a general-purpose personal computer 1000 illustrated in Fig.10, which can perform various functions when various programs are installed thereon.

In Fig.10, a Central Processing Unit (CPU) 1001 performs various processes according to a program stored in a Read Only Memory (ROM) 1002 or loaded from a storage portion 1008 into a Random Access Memory (RAM) 1003 in which data required when the CPU 1001 performs the various processes is also stored as needed.

The CPU 1001, the ROM 1002 and the RAM 1003 are connected to each other via a bus 1004 to which an input/output interface 1005 is also connected.

The following components are connected to the input/output interface 1005: an input portion 1006 including a keyboard, a mouse, etc.; an output portion 1007 including a display, e.g., a Cathode Ray Tube (CRT), a Liquid Crystal Display (LCD), etc., a speaker, etc.; a storage portion 1008 including a hard disk, etc.; and a communication portion 1009 including a network interface card, e.g., an LAN card, a modem, etc. The communication portion 1009 performs a communication process over a network, e.g., the Internet.

A drive 1010 is also connected to the input/output interface 1005 as needed. A removable medium 1011, e.g., a magnetic disk, an optical disk, a magneto optical disk, a semiconductor memory, etc., can be installed on the drive 1010 as needed so that a computer program fetched therefrom can be installed into the storage portion 1008 as needed.

In the case that the foregoing series of processes are performed in software, a program constituting the software is installed from a network, e.g., the Internet, etc., or a storage medium, e.g., the removable medium 1011, etc.

Those skilled in the art shall appreciate that such a storage medium will not be limited to the removable medium 1011 illustrated in Fig.10 in which the program is stored and which is distributed separately from the device to provide a user with the program. Examples of the removable medium 1011 include a magnetic disk (including a Floppy Disk (a registered trademark)), an optical disk (including Compact Disk-Read Only memory (CD-ROM) and a Digital Versatile Disk (DVD)), a magneto optical disk (including a Mini Disk (MD) (a registered trademark)) and a semiconductor memory. Alternatively the storage medium can be the ROM 1002, the hard disk included in the storage portion 1008, etc., in which the program is stored and which is distributed together with the device including the same to the user.

It shall further be noted that the steps of the foregoing series of processes may naturally but not necessarily be sequentially performed in the order as described. Some of the steps may be performed concurrently or independently from each other.

Although the invention and the advantages thereof have been described in details, it shall be appreciated that various modifications, substitutions and variations can be made without departing from the spirit and scope of the invention as defined in the appended claims. Furthermore the terms "include", "contain" and any variants thereof in the embodiments of the invention are intended to encompass nonexclusive inclusion so that a process, method, article or device including a series of elements includes not only those elements but also one or more other elements which are not listed explicitly or an element(s) inherent to the process, method, article or device. Without much more limitation, an element being defined in a sentence "include/comprise a(n)......" will not exclude presence of an additional identical element(s) in the process, method, article or device including the element.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method for acquiring keywords, comprising:
locating text areas in an image and recognizing text contents in the text areas through optical character recognition, OCR;
selecting a first class of pending keywords from the recognized text contents to search for webpages;
extracting a second class of pending keywords from the retrieved webpages;
and
determining one or more keywords corresponding to the image from at least the second class of pending keywords.

2. The method according to claim 1, wherein the selecting the first class of pending keywords from the recognized text contents to search for webpages comprises:
selecting in the respective text areas one or more text contents with a confidence above a first threshold from the recognized text contents as the first class of pending keywords; and
selecting in each text area one keyword from the first class of pending keywords selected for the respective text areas, and combining the selected keywords to search the webpage according to respective combination results.

3. The method according to claim 1 or 2, wherein the extracting the second class of pending keywords from the retrieved webpages comprises:
selecting one or more representative webpages from the retrieved webpages under a predetermined rule; and
extracting the second class of pending keywords from the selected representative webpages.

4. The method according to any one of claims 1 to 3, wherein the determining the one or more keywords corresponding to the image from at least the second class of pending keywords comprises:
selecting one or more keywords with a confidence above a second threshold from the second class of pending keywords as the keywords corresponding to the image.

5. The method according to any one of claims 1 to 4, wherein the determining
the one or more keywords corresponding to the image from at least the second class of pending keywords comprises:
selecting the keywords corresponding to the image from the first class of pending keywords and/or the second class of pending keywords according to the result of verifying the second class of pending keywords against the first class of pending keywords.

6. A device for acquiring keywords, comprising:
a recognizing unit adapted to locate text areas in an image and to recognize text contents in the text areas through optical character recognition, OCR;
a searching unit adapted to select a first class of pending keywords from the recognized text contents to search for webpages;
an extracting unit adapted to extract a second class of pending keywords from the retrieved webpages; and
a determining unit adapted to determine keywords corresponding to the image from at least the second class of pending keywords.

7. The device according to claim 6, wherein the searching unit comprises:
a first selecting sub-unit adapted to select in the respective text areas one or more text contents with a confidence above a first threshold from the recognized text contents as the first class of pending keywords; and
a searching sub-unit adapted to select in each text area one keyword from the first class of pending keywords selected for the respective text areas and to combine the selected keywords to search for the webpages according to respective combination results.

8. The device according to claim 6 or 7, wherein the extracting unit comprises:
a second selecting sub-unit adapted to select representative webpages from the retrieved webpages under a predetermined rule; and
an extracting sub-unit adapted to extract the second class of pending keywords from the selected representative webpages.

9. The device according to any one of claims 6 to 8, wherein:
the determining unit is configured to select the keywords with a confidence above a second threshold from the second class of pending keywords as the keywords corresponding to the image.

10. The device according to any one of claims 6 to 9, wherein:
the determining unit is configured to select the keywords corresponding to the image from the first class of pending keywords and/or the second class of pending keywords according to the result of verifying the second class of pending keywords against the first class of pending keywords.
